# EUROPEAN PATENT APPLICATION

(11) **EP 3 454 478 A1**
(43) Date of publication of application: **13.03.2019**
(21) Application number: 17745530.0
(22) Date of filing: 26.04.2017
(51) Int. Cl.: H04B 7/155

(54) **CELLULAR COMMUNICATION SYSTEM WITH CHANNEL CAPACITY TRANSFER**

(30) Priority: 05.05.2016 RU 2016117384
(71) Applicant: Gromakov, Jury Alexeevich, Moscow 109377 (RU)
(72) Inventor: Gromakov, Jury Alexeevich, Moscow 109377 (RU)
(74) Representative: Hoffmann Eitle
(86) International application number: PCT/RU2017/050030
(87) International publication number: WO 2017/192067

(57) **Abstract**

The group of inventions relates to radio communications, particularly to wireless mobile and fixed communication systems, wireless communication systems for the Internet of Things (IoT). Use of the inventions can reduce capital and operating costs to operators, reduce time for creation and expansion of existing cellular communication systems, provide communications and wireless broadband Internet access in rural and remote areas and along highways, ensure creation of wireless communication systems for IoT, and provide cellular communication systems and wireless Internet access without the use of standard cellular macro base stations. The effect is attained owing to omission, in a cellular communication system with channel capacity transfer, of a nonstandard base station with a unit for retransmission of cellular radio channels at frequencies F_{R}, wherein functions of the unit for retransmission of cellular radio channels are implemented by installing on sites, together with standard cellular macro base stations with operating frequencies F₀ and radiation power of tens of watts (W) or separately, of additional standard micro base stations (Small Cells), which differ from macro base stations by reduced transmission power (a few hundred milliwatts, mW) and are connected to the core network via wired or wireless links providing interaction at retransmission frequencies F_{R} different from cellular operating frequencies F₀ with groups of line capacity transfer repeaters forming at operating frequencies F₀ communication areas for customer devices, which are equivalent in terms of coverage and capacity to communication areas created by standard macro base stations in conventional cellular communication systems.

## Description

### Technical Field

The claimed group of inventions relates to radio communications and can be used in the creation of cellular communication systems and their network elements, and other wireless mobile or fixed communication systems, preferably to provide communications and wireless broadband Internet access in rural and remote areas, along highways, and in creation of wireless communication systems for Internet of Things (IoT).

### Background of the Invention

A conventional cellular communication system (RU 2279764 C1, EP 1890399 B1, US 8289888 B2) of the same applicant is based on the use of capacity transfer repeaters, each of which replaces simultaneously a standard cellular base station, a relay or optic fibre line connecting the base station with other network elements, while maintaining the capacity and size of the communication area.

The conventional cellular system with channel capacity transfer comprises switch subsystem and a base station subsystem connected with each other; the base station subsystem includes K groups, where K is an integer, of line repeaters with transfer of system channel capacity, and at least one base station comprises a unit for retransmission of cellular system radio channels, connected by its first input/output to an antenna input/output of the base station, for interaction of the base station with the groups of line capacity transfer repeaters through standard cellular channels directly at retransmission frequencies F_{R}, which are different from cellular operating frequencies F₀, and connected by its second input/output to a digital unit for distribution and switching of base station messages; each group of line capacity transfer repeaters includes L intermediate line capacity transfer repeaters and M terminal line capacity transfer repeaters of the system, mutually connected at retransmission frequencies F_{R} and connected at operating frequencies F₀ with respective customer devices directly or via an additional cellular channel repeater at operating frequencies F₀ of the system, where L≥1, M≥1. Hereinafter, customer devices refer to either mobile or stationary stations, terminals, sensors and IoT devices, as well as other terminal devices of wireless and cellular communication systems.

In the conventional cellular system the radiation power of transmitters of the unit for cellular channel retransmission and transmitters of the capacity transfer repeaters that provide transmission of cellular channels at frequencies F_{R} between two cellular towers via directional antennas, like relay lines successively connecting cellular base stations, is a few hundred milliwatts (mW), while the power of transmitters of base stations that provide communication with customer devices at operating frequencies F₀ is tens of watts (W) (see, for example, Y.A. Gromakov. Cellular Communication System with Capacity Transfer. Elektrosvyaz', No. 11, 2013, pp. 38-41).

Therefore, the conventional cellular system with channel capacity transfer uses a nonstandard base station comprising a unit for retransmission of cellular system channels radiated at frequencies F_{R}, which differ from cellular operating frequencies F₀, with the radiation power of retransmission transmitters much lower than that of transmitters of standard cellular base stations with operating frequencies F₀.

In practice, the conventional base station comprising a unit for retransmission of cellular system channels has a number of disadvantages. For example, modification of the standard base station structure by addition of the unit for retransmission of cellular system channels at frequencies F_{R} requires modifications in the structure of the digital unit for generation, distribution and switching of messages transmitted by the standard base station, and also requires installation of new software on the base station and application of a new power supply. Furthermore, increasing the number of transceivers in the standard base station (with account of the unit for retransmission of cellular system channels at frequencies F_{R}), controlled by the common digital unit of the base station logically implies that a multi-sector base station is constructed for the cellular network, it requires respective modifications to the system software. Installation of the aforementioned base station in a cellular system instead of the standard base station requires interruption in servicing the customers in the communication area of the current base station. A further disadvantage of the conventional base station is that the unit for retransmission of cellular system channels, coupled to the digital unit for generation, distribution and switching of messages transmitted by the standard base station, is compatible only with a base station of a specific manufacturer (vendor) and is not a unified equipment compatible with base stations of other manufacturers, unlike capacity transfer repeaters, which are compatible via the unit for retransmission of cellular system channels through a standard radio interface at frequencies F_{R} with base stations of any manufacturer.

### Object of the Invention

The object of the group of inventions is to provide new cellular system with channel capacity, which can overcome the aforementioned disadvantages of the conventional cellular system with channel capacity transfer, without the use of nonstandard cellular communication base stations with the unit for retransmission of cellular system channels at frequencies F_{R}, without modifications in hardware and network software, without interruption of customer service in the communication area for the time of installation of the base station with the unit for retransmission of cellular system channels at frequencies F_{R}, and which ensures joint operation with cellular base stations of any manufacturers using only standard cellular base stations. It should be noted that hereinafter cellular standards include, but are not limited to, the following standards: GSM, GSM-R, EC-GSM, UMTS/HSPA, CDMA2000, LTE, LTE-A, LTE-M, NB LTE, etc. Attainment of the above object can reduce capital and operating costs to operators, reduce time for creation and expansion of existing cellular systems, provide communications and wireless broadband Internet access in rural and remote areas and along highways, and provide creation of a wireless communication system for the Internet of Things (IoT). The concept of the Internet of Things (IoT) is disclosed in, for example, in Ericsson White Paper. Cellular Networks for Massive IoT. Uen 284 23-3278, January 2016, p. 13 and Nokia Networks White Paper. LTE-M - Optimizing LTE for the Internet of Things, 2015, p. 15.

### SUMMARY OF THE INVENTION

A first technical effect of the present group of inventions is attained owing to omission, in a conventional cellular system with channel capacity transfer, of a nonstandard base station with a unit for retransmission of cellular system channels at frequencies F_{R}; furthermore, functions of the unit for retransmission of cellular system channels, providing interaction with K groups of line capacity transfer repeaters at frequencies F_{R}, are implemented by installing on sites (hereafter term "sites" refer to places of installation of cellular base stations), together with standard cellular base stations (hereinafter they are referred to as cellular macro base stations) with operating frequencies F₀ and a radiation power of tens of watts (W), of additional standard micro base stations (which are also referred to as Small Cells) that are distinguished from the macro base stations by a reduced transmission power (a few hundred milliwatts, mW), small size, low power consumption and much lower cost (see example www.smallcellforum.org, document 030.05.03 Small Cells, What's the big idea?, February 2014, p.21). The micro base stations are structurally formed as a small-size monoblock; they usually contain a smaller number of radio channels compared to macro base stations. In micro base stations, which functionally replace in the conventional base station the unit for retransmission of cellular system channels at frequencies F_{R}, cellular signals can be generated directly at retransmission frequencies F_{R} or cellular operating frequencies F₀ with subsequent transfer of cellular radio channels from radio frequencies F₀ to retransmission frequencies F_{R} by a radio frequency converter connected to antenna inputs/outputs of micro base stations. Required number of retransmission channels can be provided by simultaneous installation of a plurality of standard micro base stations. In this case, micro base stations of different cellular standards can be installed simultaneously to communicate with groups of capacity transfer repeaters having a matching cellular standard. Micro base stations are connected directly to the core network via assigned wireless or wired (IP or other) communication channels, e.g. channels connecting standard macro base stations on sites with the core network, or via channels of a shared Internet access network, and then sequentially through a security server (SGW-Security Gateway), a service server of micro base stations (FGW-Femto Gateway), or by another method, to the cellular network core (see for example, Guo W., Wang S., Chu X., Zhang Y., Chen Y., Song H., Automated Small Cells Deployment for Heterogeneous Cellular Networks//IEEE Communications Magazine. 2013, Vol. 51, No. 5, p.p. 46-53). Integration of micro base stations, when they are installed in a cellular radio subsystem containing macro base stations, can be accomplished automatically using the standard technology of self-organizing networks (SON), which ensures the interaction of communication areas formed by micro base and macro base stations, by automatic configuration, self-optimization and self-recovery, including automated integration of cellular micro base stations (Plug-n-Play), dynamic adjustment of parameters of cellular radio signals (DRC-Dynamic Radio Configuration), implementation of handover to provide continuity of communication areas for customer devices (see, for example, Hämäläinen S., Sanneck h, Sartori C. LTE Self-Organizing Networks (SON): Network Management Automation for Operational Efficiency. NY: John Wiley & Sons Ltd., 2012, p. 398).

Therefore, the replacement of the unit for retransmission of cellular radio channels at frequencies F_{R} in the conventional macro base station by standard micro base stations, which provide interaction with K groups of line capacity transfer repeaters at retransmission frequencies F_{R}, connected with macro base stations cellular stations according to standard automatic procedures of integration of micro base stations (including the provision of handover at transition of customer devices from a a large to small cell of the micro base station and back), commonly used in self-organizing networks (SON), allows the creation of a cellular station with channel capacity transfer without the use of the conventional nonstandard macro base station with a unit for retransmission of cellular channels at frequencies F_{R}, without modification of the structure and software of standard macro base stations operating in the cellular system, and without interruption in system customer service, using only standard cellular macro and micro base stations.

Furthermore, application of standard cellular micro base stations with a radiation power of a few hundred milliwatts (mW), which provide interaction with groups of capacity transfer repeaters at frequencies F_{R} and exclude the application of conventional nonstandard macro base stations with the unit for retransmission of cellular radio channels at frequencies F_{R}, provides the invariance of creation of cellular communication systems with channel capacity transfer relative to standard macro and micro base stations of any manufacturer used in the cellular systems, provides the compatibility of existing cellular systems with newly created cellular systems with channel capacity transfer, can substantially reduce capital and operation costs of operators and reduce time for creation of new and expansion of existing cellular systems.

A second technical effect is the ability of installation of micro base stations, used for retransmission of cellular channels at frequencies F_{R}, to provide interaction with groups of capacity transfer repeaters on independent sites geographically spaced apart from sites of standard cellular macro base stations, for example, in places of direct vicinity of one of the capacity transfer repeaters, with connection of micro base stations (Small Cells) directly to the core network via its wired or wireless links, and at connection of micro base stations via wired or wireless links of a shared Internet access network through successively connected a security server (SGW-Security Gateway), a service server of micro base stations (FGW-Femto Gateway) or in another way. In this case, the radiation power of transmitters in micro base stations can be further reduced to units or tens of milliwatts (mW), and reduced power consumption can allow the use of low cost alternative sources of power supply, for example, solar panels.

Therefore, installation of micro base stations, which provide interaction with capacity transfer repeaters at frequencies F_{R}, on sites geographically spaced apart from sites of standard macro base stations, can allow successive increase in the capacity and expansion of coverage areas of cellular communication systems, irrespective of operating standard macro base stations of different manufacturers; creation of new continuous or local communication areas of any standards based on capacity transfer repeaters for customer devices in isolated or remote areas, in rural or sparsely populated areas, along highways, in buildings, underground structures, subways and other places.

A third technical effect is the ability to provide cellular communication systems and wireless broadband Internet access with large communication area that is equivalent to the coverage area of macro base stations without the use of standard macro base stations based on the use of only micro base stations, which provide transmission and reception of standard cellular channels directly at retransmission frequencies F_{R}, and capacity transfer repeaters that receive and transmit these channels at frequencies F_{R} providing communication with customer devices at cellular operating frequencies F₀ on their sites.

The technical effect is attained owing to the fact that in a cellular communication system with channel capacity transfer a macro base station with a unit for retransmission of radio channels at frequencies F_{R}, creating simultaneously a communication area (cell) at frequencies F₀, is omitted from the cellular network; equivalent communication area at frequencies F₀ and cell capacity are provided by one or more capacity transfer repeaters interacting at frequencies F₀ with customer devices and at retransmission frequencies F_{R} directly with cellular micro base stations connected via assigned wired or wireless links or via channels of a shared Internet access network or by another method to the core network.

Therefore, the capacity transfer repeaters, replacing standard cellular macro base stations in the communication area and cell capacity, interact successively at frequencies F_{R} with micro base stations and via them with the core network, while at frequencies F₀ they provide interaction with customer devices, functionally replacing on sites macro base stations, radio relay or fiber optic communication lines.

The present inventions are applicable in all cellular standards and are implemented with the use of non-expansive standard micro base stations of any manufacturer. They can reduce capital and operating costs of operators, decrease power consumption of sites, expand functional capabilities of cellular networks, in particular due to the possibility of simultaneous use of micro base stations with different cellular standards (for example, GSM, GSM-R, EC-GSM, UMTS/HSPA, CDMA2000, LTE, LTE A, LTE-M, NB LTE, etc.) to provide interaction with groups of cellular capacity transfer repeaters of a matching standard.

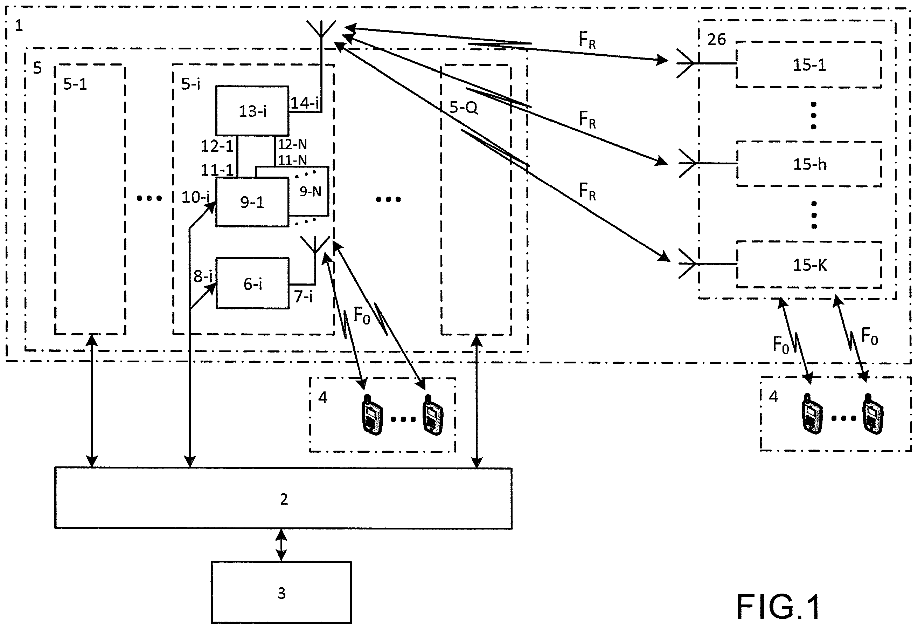

Figs. 1-7 show functional diagrams of cellular communication systems with channel capacity transfer, using micro base stations to interact with capacity transfer repeaters at frequencies F_{R} with or without the use of nonstandard macro base stations.

### Brief Description of Drawings

Fig. 1 shows a functional diagram of an embodiment of a cellular system with channel capacity transfer, based on the use of standard micro base stations forming radio channels at operating frequencies F₀, which comprise a radio frequency converter to provide transfer of standard cellular channels from operating frequencies F₀ to retransmission frequencies F_{R}, on which interaction is provided with groups of capacity transfer repeaters connected on their sites with customer devices at cellular operating frequencies F₀. The cellular system comprises a standard macro base station that provides interaction with customer devices at cellular operating frequencies F₀.

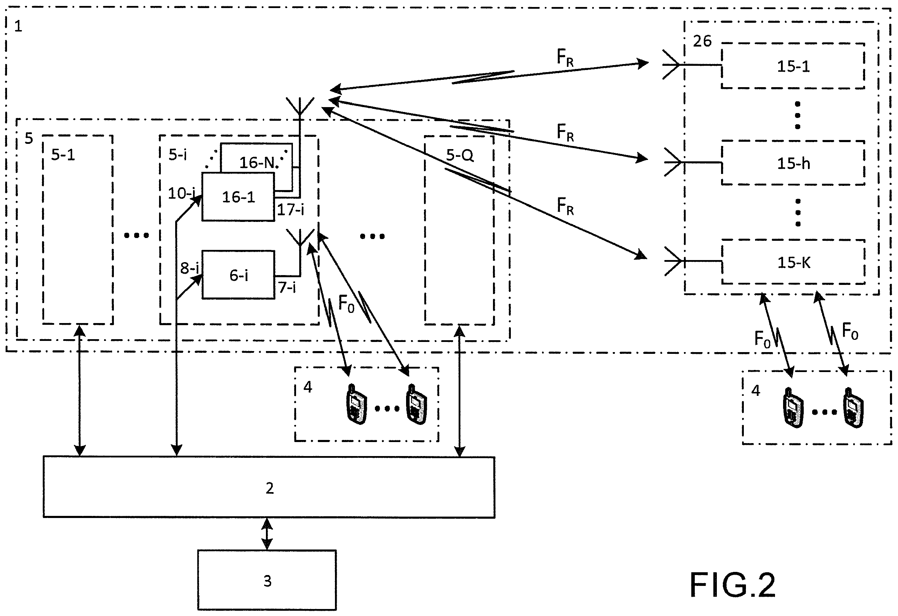

Fig. 2 shows a functional diagram of an embodiment of a cellular system with channel capacity transfer, which differs from the functional diagram in Fig. 1 by the use of a micro base station forming radio channels directly at retransmission frequencies F_{R} without the use of a radio frequency converter. Similarly to the functional diagram in Fig. 1, cellular macro and micro base stations are located on a common site and connected via a shared wired or wireless link to the core network.

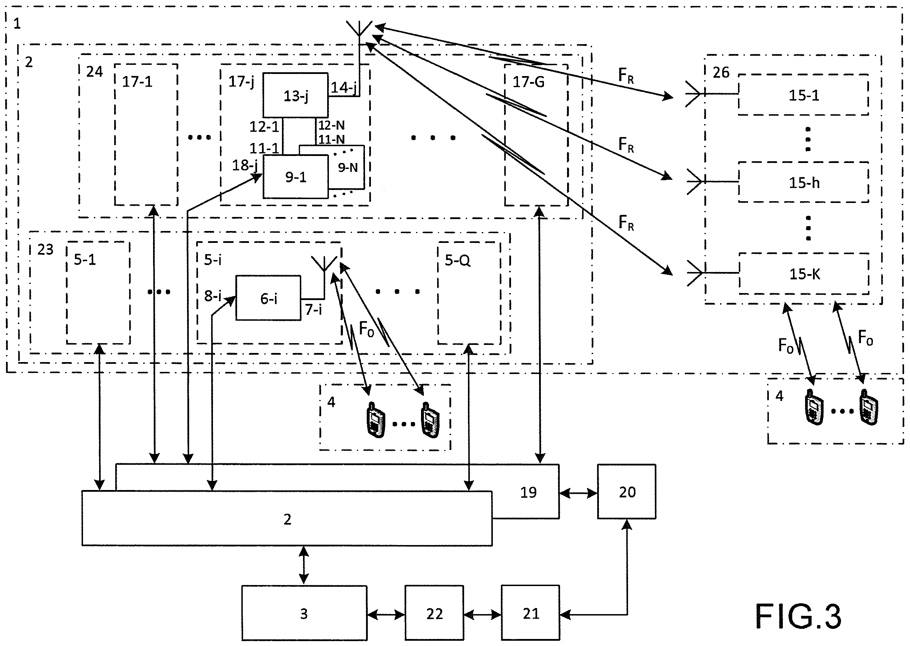

Fig. 3 shows a functional diagram of an embodiment of a cellular system with channel capacity transfer, which differs from the diagram in Fig. 1 in that the cellular macro and micro base stations are located on separate, geographically spaced sites. Micro base station sites are connected with the core network via own wired or wireless links or can be connected to the core network through shared Internet access channels.

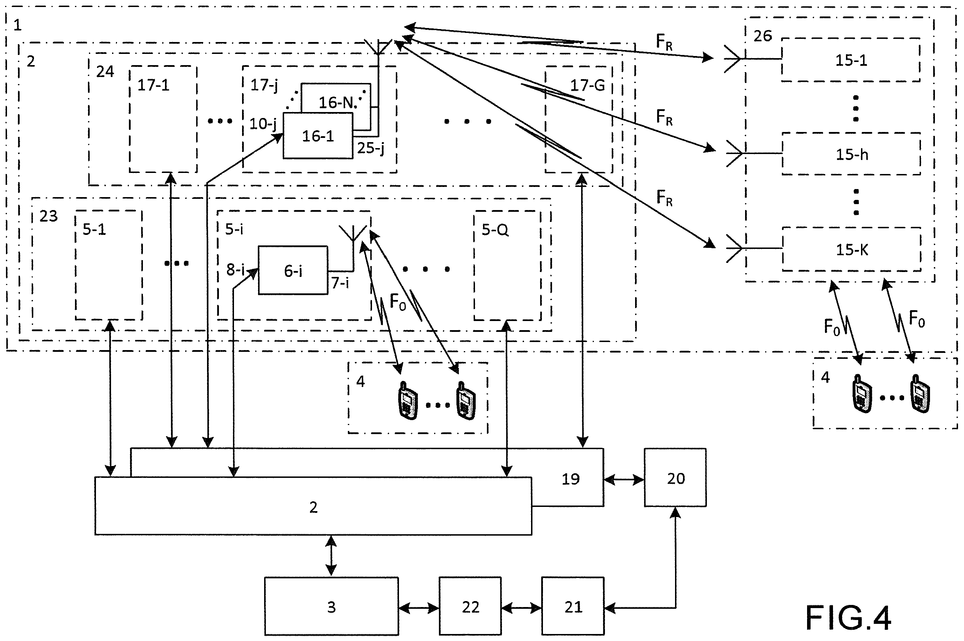

Fig. 4 shows a functional diagram of an embodiment of a cellular system with channel capacity transfer, which differs from the diagram in Fig. 3 by the use of a micro base station forming radio channels directly at retransmission frequencies F_{R} without the use of a radio frequency converter.

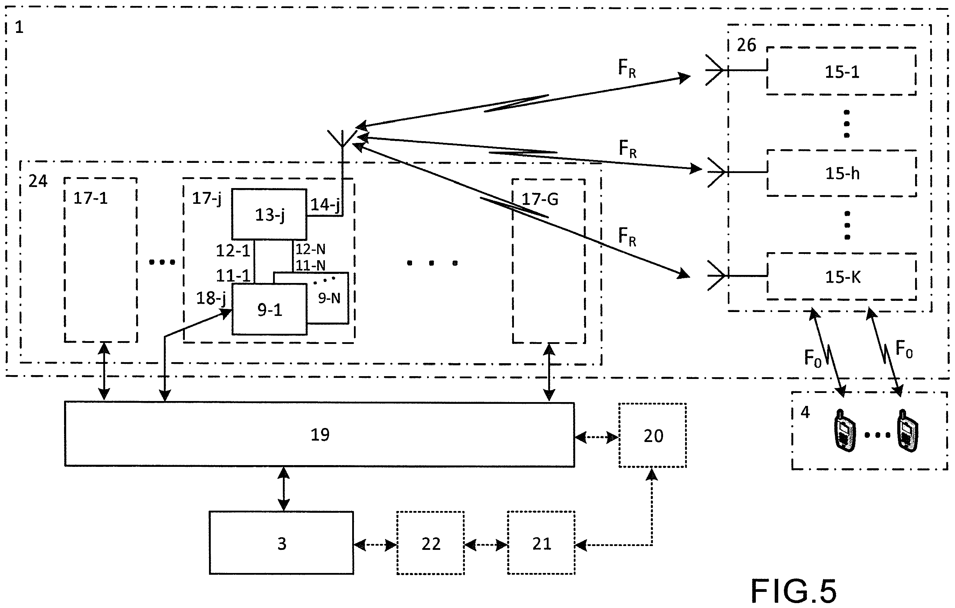

Fig. 5 shows a functional diagram of an embodiment of a cellular system with channel capacity transfer, which differs from the diagram in Fig. 3 by the absence of sites with cellular macro base stations. In this case, a cellular communication area for customer devices at cellular operating frequencies F₀ is created by groups of capacity transfer repeaters interacting through cellular radio channels directly at retransmission frequencies F_{R} via a radio frequency converter with standard micro base stations connected via assigned wired or wireless links or channels of a shared Internet access network, or by another method to the core network.

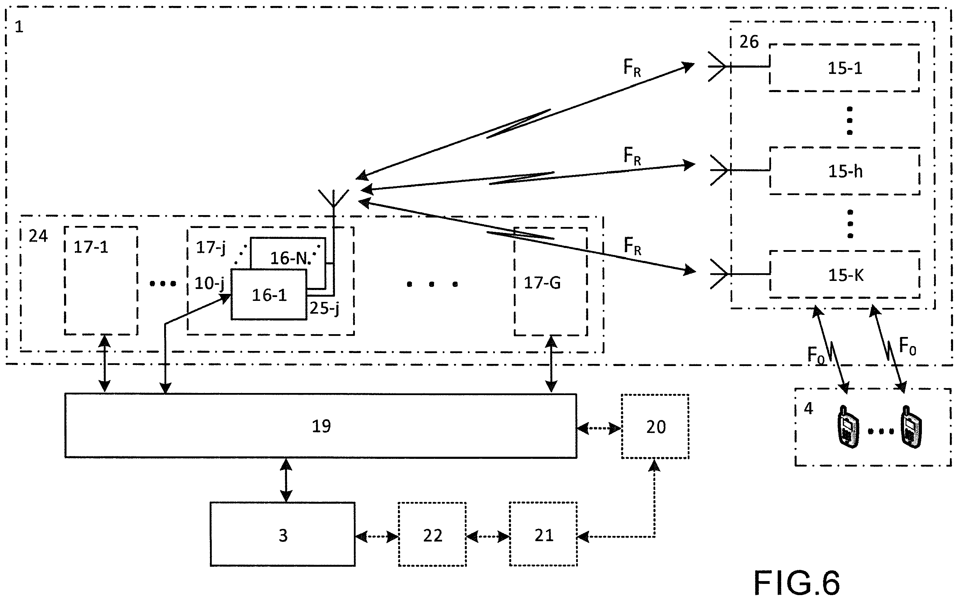

Fig. 6 shows a functional diagram of an embodiment of a cellular system with channel capacity transfer, which differs from the diagram in Fig. 5 by the absence of a radio frequency converter and by the use of micro base stations forming radio channels directly at retransmission frequencies F_{R}.

### DETAILED DESCRIPTION

### First Embodiment

According to a first embodiment, a cellular communication system with channel capacity transfer, shown in Fig. 1, comprises a core network 3 connected via backhaul 2 links to a radio subsystem 1 connected through standard cellular radio channels at operating frequencies cellular F₀ with customer devices 4.

The radio subsystem 1 comprises a subsystem of sites 5-1...5-i...5-Q of base stations; each base station site is denoted as 5-i, where Q, i are integers, 1≤i≤Q; each site includes standard cellular macro base stations 6-1...6-i...6-Q, and each standard cellular macro base station is denoted as 6-i. Each standard cellular macro base station 6-i is connected by its first antenna input/output 7-i through cellular radio channels at operating frequencies F₀ with customer devices 4, and by second input/output 8-i via wired or wireless backhaul 2 links with the core network 3.

At least one site 5-i comprises N standard micro base stations 9-1...9-N, where N is an integer, which are connected by their first inputs/outputs 10-i with the core network 3 via cellular wired or wireless backhaul link 2, shared with standard macro base station 6-i; by their second inputs/outputs 11-1...11-N at frequencies F₀ the standard micro base stations 9-1...9-N directly interact with respective inputs/outputs 12-1...12-N of a radio frequency converter 13-1 that provides transfer of standard cellular channels formed by the micro base stations 9-1...9-N from operating frequencies F₀ to the retransmission frequencies F_{R} bandwidth at transmission and frequency transfer of radio channels of the capacity transfer repeaters from frequencies F_{R} to the bandwidth of operating frequencies F₀ at reception. Antenna input/output 14-i of the radio frequency converter 13-i is connected with groups of capacity transfer repeaters 15-1...15-h...15-K, where h, K are integers, 1≤h≤K, through cellular radio channels at frequencies F_{R}.

Furthermore, groups of capacity transfer repeaters 15-1...15-h...15-K interact on their sites with customer devices 4 at cellular operating frequencies F₀ and are successively connected among themselves at frequencies F_{R} in a manner accepted in the conventional cellular system (see aforementioned patent documents RU 2279764 C1, EP 1890399 B1, US 8289888 B2) of the same applicant. It should be noted that in contrast to the conventional base station, N micro base stations, replacing the unit for retransmission of cellular radio channels, can operate in different cellular standards and simultaneously interact at their retransmission frequencies F_{R} with K groups of capacity transfer repeaters 26 with a matching standard. The group 9-1...9-N of micro base stations may simultaneously include micro base stations differing not only by standards, but by manufacturers (vendors) also, since their interaction with core network 3 via backhaul 2 links is performed through standard interfaces (see e.g. www.smallcellforum.org, document 030.05.03 Small Cells, What's the big idea?, February 2014, p.21). Furthermore, separate groups of capacity transfer repeaters 26, in conjunction with micro base stations 9-1...9-N interacting with them at frequencies F_{R} via radio frequency converters 13-i, may belong to different cellular operators, including Cellular Virtual Network Operators (MVNO), which use the existing infrastructure of another cellular operator, but sell services under own mark.

At the functional diagram shown in Fig. 1, micro base stations 9-1...9-N are located on a site 5-i common with the cellular macro base station and interact with the core network 3 via a second input/output 10-i via a wired or wireless backhaul link 2, shared with the macro base station 6-i.

### Second Embodiment

According to a second embodiment, Fig. 2 shows a functional diagram of an embodiment of a cellular system with channel capacity transfer, shown in Fig. 1.

The functional diagram of the cellular system shown in Fig. 2 is distinguished from the functional diagram of the cellular system shown in Fig. 1 by the fact that in the radio subsystem 1 shown in Fig. 1 at least at one site 5-i of micro base stations 9-1...9-N with operating frequencies F₀ in conjunction with the radio frequency converter 13-i interacting directly at retransmission frequencies F_{R} with groups of capacity transfer repeaters 15-1...15-h...15-K, as shown in Fig. 1, are replaced by micro base stations 16-1...16-N, where N is an integer, forming standard radio channels directly at retransmission frequencies F_{R}. In this case, micro base stations 16-1...16-N are connected, via antenna input/output 17-i, with capacity transfer repeaters 15-1...15-h...15-K at retransmission frequencies F_{R}. Groups of capacity transfer repeaters 15-1...15-h...15-K interact on their sites at operating frequencies F₀ with customer devices 4, thereby reducing the cost and equipment of the sites. Macro base stations 6-i on sites 5-1...5-Q of the radio subsystem 1 and groups of capacity transfer repeaters 15-1...15-h...15-K (similarly to the functional diagram shown in Fig. 1) interact with customer devices 4 at cellular operating frequencies F₀. Similarly to the functional diagram shown in Fig. 1, N micro base stations can operate in different cellular standards and interact simultaneously at their retransmission frequencies F_{R} with groups of capacity transfer repeaters 26 of a matching cellular standard. The group of micro base stations 16-1...16-N may simultaneously include micro base stations that are distinguished not only by standards, but manufacturers also. Micro base stations 16-1...16-N may belong to different cellular operators, including virtual operators (MVNO).

At the functional diagram shown in Fig. 2, micro base stations 16-1...16-N are located on a site 5-i common with cellular macro base station 6-i and interact through a second input/output 10-i via a shared wired or wireless backhaul link 2 with the core network 3.

### Third Embodiment

According to a third embodiment, in a cellular system whose functional diagram is shown in Fig. 3 micro base stations 9-1...9-N providing retransmission of cellular channels via radio frequency converters 13-j at frequencies F_{R} for interaction with groups of capacity transfer repeaters 15-1...15-h...15-K are located on separate micro base station sites 17-1...17-j...17-G, each site being denoted as 17-j, 1≤j≤G, where j is an integer. The micro base station sites 17-j are geographically spaced apart from sites 5-1...5-i...5-Q of standard cellular macro base stations 6-1...6-i...6-Q. The cellular system, whose functional diagram is shown Fig. 3, comprises mutually connected via the core network 3 a radio subsystem 23 of cellular macro base stations, including sites 5-1...5-i...5-Q with cellular macro base stations 6-1... 6-i...6-Q connected at cellular system operating frequencies F₀ via an antenna input/output 7-i with customer devices 4, and a radio subsystem 24 of micro base stations 9-1...9-N, including micro base station sites 17-1...17-j...17-G, where G is an integer. Furthermore, each micro base station site 17-j comprises 9-1...9-N micro base stations, similarly to the functional diagram shown in Fig. 1, successively connected with frequency converters 13-1...13-j...13-G for converting operating frequencies F₀ to the retransmission frequencies F_{R} bandwidth at transmission and for frequency transfer of channels of capacity transfer repeaters from frequencies F_{R} to the bandwidth of cellular operating frequencies F₀ at reception.

Furthermore, the functional diagram of a cellular system in Fig. 3 differs from the functional diagram of a cellular system in Fig. 1 by the fact that connection of micro base stations 9-1...9-N on sites 17-1...17-j...17-G to the core network 3 is performed via wired or wireless links of an independent backhaul 19 of micro base stations directly with the core network 3, or via the Internet 20, (as shown in Fig. 3) successively via a security server (SGW-Security Gateway) 21, a service server of micro base stations (FGW-Femto Gateway) 22 or in another way.

Thus, it becomes possible to dispose micro base stations 9-1...9-N not only on sites 5-1...5-i...5-Q of cellular macro base stations 6-1... 6-i...6-Q, but also on separate cellular micro base station sites 17-1...17-j...17-G in any place, where the Internet 20 or another communication network, relating or not relating to the operator's cellular network, is available; this simplifies substantially the creation of cellular networks with capacity transfer, eliminates the need of laying additional cable channels to sites of standard macro base stations, decreases capital and operating costs of the operators. In this case, cellular macro base stations 6-1... 6-i...6-Q, similarly to the functional diagram shown in Fig. 1, are located on sites 5-1...5-i...5-Q of the subsystem 23 of macro base stations and communicate with customer devices 4 at cellular operating frequencies F₀, while groups of capacity transfer repeaters 15-1...15-h...15-K, connected at frequencies F_{R} via radio frequency converters 13-1...13-j...13-G with micro base stations 9-1...9-N located on sites 17-1...17-j...17-G, communicate with customer devices 4 at cellular operating frequencies F₀. It should be noted that each of said K groups of capacity transfer repeaters 15-1...15-h...15-K may operate in one of the aforementioned cellular standards. All functional capabilities of the functional diagram in Fig. 3 correspond to functional capabilities of the functional diagrams shown in Fig. 1 and Fig. 2.

### Forth Embodiment

According to a forth Embodiment, Fig. 4 shows a functional diagram of a present cellular system with channel capacity transfer, which differs by omission from the functional diagram, shown in Fig. 3, of radio frequency converters 13-1...13-j...13-G for converting operating frequencies F₀ to retransmission frequencies F_{R}. In this case, micro base station sites 17-1...17-j...17-G use micro base stations 16-1...16-N operating directly at retransmission frequencies F_{R}, thereby providing interaction with groups of capacity transfer repeaters 15-1...15-h...15-K, and through them at operating frequencies F₀ with customer devices 4 as well. Micro base stations 16-1...16-N on sites 17-1...17-j...17-G can be connected by direct wired or wireless links directly to the core network 3 either via backhaul 19 links of micro base stations geographically spaced apart from sites 5-1...5-i...5-Q of cellular macro base stations 6-1... 6-i...6-Q, or connected to the core network 3 via the Internet 20, successively via a security server (SGW-Security Gateway) 21, a service server 22 of micro base stations (FGW-Femto Gateway) or by another method; thereby costs for construction of a cellular network with capacity transfer can be further reduced in addition to the functional diagram shown in Fig. 3. Cellular macro base stations 6-1...6-i...6-Q (similarly to the diagram shown in Fig. 3) are located on sites 5-1...5-i...5-Q of the radio subsystem 23 of cellular macro base stations and, like the groups of capacity transfer repeaters 15-1...15-h...15-K, communicate with customer devices 4 at cellular operating frequencies F₀. It should be also noted that each of said K groups of capacity transfer repeaters 15-1...15-h...15-K and micro base stations 16-1...16-N connected with them may operate in one of the aforementioned cellular standards. All functional capabilities of the functional diagram in Fig. 4 correspond to functional capabilities of the diagram shown in Fig. 3.

### Fifth Embodiment

According to a fifth embodiment, Fig. 5 shows a functional diagram of a cellular system with channel capacity transfer, in which a radio subsystem 1 includes only sites 17-1...17-j...17-G of micro base stations, each micro base station site being denoted as 17-j, 1≤j≤G, where j is an integer. Each micro base station site 17-j comprises 9-1...9-N micro base stations interacting directly by its inputs/outputs 18-1...18-j...18-G via wired or wireless backhaul 19 links of micro base stations with the core network 3. Second inputs/outputs 11-1...11-N of micro base stations 9-1...9-N on sites 17-...17-j...17-G are successively connected with inputs/outputs 12-1...12-N of radio frequency converters 13-1...13-j...13-G, whose antenna inputs/outputs 14-1...14-j...14-G interact with groups of capacity transfer repeaters 15-1...15-h...15-K at retransmission frequencies F_{R} and through them with customer devices 4 at operating frequencies F₀. Each of said K groups of capacity transfer repeaters 15-1...15-h...15-K may operate in one of the aforementioned cellular standards.

The functional diagram of a cellular system shown in Fig. 5 is distinguished from the functional diagrams of cellular systems shown in Fig. 3, Fig. 4, by omission from the cellular radio subsystem 1 of a radio subsystem 23 of macro base stations with sites 5-1...5-i...5-Q with macro base stations 6-1...6-i...6-Q, and of backhaul 2 links of macro base stations. As a result, in the functional diagram of a cellular system shown in Fig. 5, the cellular radio subsystem 1, which provide interaction with customer devices 4, is formed by K groups of capacity transfer repeaters 15-1...15-h...15-K successively interacting with radio frequency converters 13-1...13-j...13-G, and via them with micro base stations 9-1...9-N successively connected via links of the backhaul 19 of micro base stations with the core network 3, or connected to the core network 3 via the Internet 20, successively via a security server (SGW-Security Gateway) 21, a service server 22 of micro base stations (FGW-Femto Gateway) or in another way.

### Sixth Embodiment

According to a sixth embodiment, Fig. 6 shows a functional diagram of a cellular system with channel capacity transfer, which is distinguished from the functional diagram of a cellular system shown in Fig. 5, in that in the radio subsystem 24 in Fig. 5 micro base stations 9-1...9-N with operating frequencies F₀ in conjunction with radio frequency converters 13-j mutually connected at retransmission frequencies F_{R} with groups of capacity transfer repeaters 15-1...15-h...15-K are replaced by cellular micro base stations 16-1...16-N, which form standard cellular channels directly at retransmission frequencies F_{R}. Furthermore, via antenna input/output 25-j micro base stations 16-1...16-N are connected with K groups of capacity transfer repeaters 15-1...15-h...15-K at retransmission frequencies F_{R}. Groups of capacity transfer repeaters 15-1...15-h...15-K communicate on their sites with customer devices 4 at cellular operating frequencies F₀.

Therefore, present inventions (see functional diagrams shown in Fig. 5 and Fig. 6) allow the creation of cellular communication systems of any known cellular standard with small and large communication areas in cities, countryside, remote areas, along highways and in other places without the use of standard macro base stations, radio relay lines and their power supply systems, with a significantly reduced number of optic fibre communication channels (backhaul).

In all functional diagrams the present cellular communication systems with channel capacity transfer, shown in Figs. 1 to 6, may simultaneously use for interaction of the cellular system with groups of capacity transfer repeaters 15-1...15-h...15-K cellular micro base stations of different standards and groups of line capacity transfer repeaters 15-1...15-h...15-K with different topological schemes of a matching cellular standard, providing different configurations of communication areas.

Therefore, the inventive group of inventions ensures the creation of multi-standard cellular systems with simultaneous use of micro base stations of different manufacturers with common or independent communication areas; furthermore, a single network core can be used, or there can be created interacting and autonomous cellular systems and wireless broadband access systems, or cellular systems for the |Internet of Things (IoT) belonging to different operators and different bandwidths of cellular frequencies.

Upon comparison of the invention with the prior art technical solutions it can be asserted that the inventions meet the novelty condition, and the lack of distinctive features of this group of inventions in the prior art solutions and the inability of the latter to attain the technical effects provided by the present group of inventions indicates that the disclosed group of inventions meet the inventive step condition.

Preliminary tests have confirmed that the present group of inventions can be widely applied in industry, thereby certifying the compliance of the group of inventions with the industrial applicability condition.

## Claims

1. A cellular communication system with channel capacity transfer, comprising:
a core network 3 connected via backhaul 2 links to a radio subsystem 1 that is connected through cellular radio channels at cellular operating frequencies F₀ with customer devices 4, wherein
the radio subsystem 1 comprises a subsystem of sites 5-1...5-i...5-Q, where i, Q are integers, of base stations; each base station site 5-i contains cellular macro base stations 6-i, and each macro base station 6-i is connected by its first antenna input/output 7-i through cellular radio channels at cellular operating frequencies F₀ with customer devices 4, and the macro base station 6-i is connected by second input/output 8-i via backhaul 2 links to the core network 3;
at least one site 5-i containing a macro base station 6-i includes at least one micro base station 9-1...9-N, where N is an integer, which is connected by its first inputs/outputs 10-i via backhaul 2 links to the core network 3; at least one micro base station 9-1...9-N interacts directly through its second inputs/outputs 11-1...11-N at cellular operating frequencies F₀ with respective inputs/outputs 12-1...12-N of a radio frequency converter 13-i that provides frequency transfer of cellular radio channels formed by at least one micro base station 9-1...9-N from cellular operating frequencies F₀ to the retransmission frequencies F_{R} bandwidth that are different from the operating frequencies F₀ of the cellular system; wherein antenna input/output 14-i of the radio frequency converter 13-i is connected with K groups, where K is an integer, of capacity transfer repeaters 15-1...15-K through cellular radio channels at retransmission frequencies F_{R}, and the groups of capacity transfer repeaters 15-1...15-K interact on their sites with customer devices 4 at operating frequencies F₀ and are mutually connected in each group 15-1...15-K at retransmission frequencies F_{R}.

2. A cellular communication system according to claim 1, wherein connection of micro base stations 9-1...9-N to the core network 3 is performed via shared with the macro base station 6-i wired or wireless backhaul 2 link,.

3. A cellular communication system according to any one of claims 1 or 2, wherein micro base stations 9-1...9-N with radio frequency converters 13-j, where j is an integer, interacting with groups of capacity transfer repeaters 15-1...15-K are located on separate sites 17-1...17-G, where G is an integer, of micro base stations geographically spaced apart from sites 5-1...5-Q of base stations 6-1...6-Q, and connection of micro base stations 9-1...9-N to the core network 3 is performed via wired or wireless links of a separate backhaul 19 of micro base stations.

4. A cellular communication system according to claim 3, wherein connection of micro base stations 9-1...9-N to the core network 3 is performed successively via the Internet 20, a security server 21, and a service server 22 of micro base stations.

5. A cellular communication system according to any one of claims 1, 2, 4, wherein each of said K groups of capacity transfer repeaters 15-1...15-K, in conjunction with micro base stations 9-1...9-N connected with them via the radio frequency converter 13-i, operates in any cellular standard, thereby allowing the creation of multi-standard cellular communication systems with channel capacity transfer irrespective of the cellular standard in which cellular macro base stations 6-i are operating.

6. A cellular communication system according to claim 3, wherein each of said K groups of capacity transfer repeaters 15-1...15-K, in conjunction with micro base stations 9-1...9-N connected with them via radio frequency converter 13-i, operates in any cellular standard, thereby allowing the creation of multi-standard cellular communication systems with channel capacity transfer irrespective of the cellular standard in which cellular macro base stations 6-i are operating.

7. A cellular communication system according to any one of claims 1, 2, 4, 6, using standard cellular radio interfaces at frequencies F_{R} for interaction among capacity transfer repeaters 15-1...15-K, wherein the system is invariant relative to the manufacturer of standard equipment of cellular macro base stations 6-i and micro base stations 9-1...9-N, and customer devices 4.

8. A cellular communication system according to claim 3, using standard cellular radio interfaces at frequencies F_{R} for interaction among capacity transfer repeaters 15-1...15-K, wherein the system is invariant relative to the manufacturer of standard equipment of cellular macro base stations 6-i and micro base stations 9-1...9-N, and customer devices 4.

9. A cellular communication system according to claim 5, using standard cellular radio interfaces at frequencies F_{R} for interaction among capacity transfer repeaters 15-1...15-K, wherein the system is invariant relative to the manufacturer of standard equipment of cellular macro base stations 6-i and micro base stations 9-1...9-N, and customer devices 4.

10. A cellular communication system according to any one of claims 1, 2, 4, 6, 8, 9, wherein separate groups of capacity transfer repeaters 15-1...15-K, compatible with micro base stations 9-1...9-N connected with them at frequencies F_{R} via a radio frequency converter 13-j, belong to different cellular operators, including Cellular Virtual Network Operators (MVNO) that provide communication services in different cellular standards and use different or shared cellular operating frequencies F₀ and corresponding retransmission frequencies F_{R}; wherein networks of said cellular operators interact among themselves or operate autonomously with using own backhaul links , customer databases, authentication systems, switching systems, provided services and cellular communications rates.

11. A cellular communication system according to claim 3, wherein separate groups of capacity transfer repeaters 15-1...15-K, compatible with micro base stations 9-1...9-N connected with them at frequencies F_{R}, belong to different cellular operators, including Cellular Virtual Network Operators (MVNO) that provide communication services in different cellular standards and use different or shared cellular operating frequencies F₀ and corresponding retransmission frequencies F_{R}; wherein networks of said cellular operators interact among themselves or operate autonomously with using own backhaul links , customer databases, authentication systems, switching systems, provided services and cellular communications rates.

12. A cellular communication system according to claim 7, wherein separate groups of capacity transfer repeaters 15-1...15-K, compatible with micro base stations 9-1...9-N connected with them at frequencies F_{R}, belong to different cellular operators, including Cellular Virtual Network Operators (MVNO) that provide communication services in different cellular standards and use different or shared cellular operating frequencies F₀ and corresponding retransmission frequencies F_{R}; wherein networks of said cellular operators interact among themselves or operate autonomously with using own backhaul links , customer databases, authentication systems, switching systems, provided services and cellular communications rates.

13. A cellular communication system with channel capacity transfer, comprising:
a core network 3 connected via backhaul 2 links to a radio subsystem 1 that is connected through cellular radio channels at cellular operating frequencies F₀ with customer devices 4, wherein
the radio subsystem 1 comprises a subsystem of sites 5-1...5-i...5-Q, where i, Q are integers, of base stations; each base station site 5-i includes cellular macro base stations 6-i; each macro base station 6-i is connected by its first antenna input/output 7-i via cellular radio channels at cellular operating frequencies F₀ with customer devices 4; and the macro base station 6-i is connected by its second input/output 8-i via backhaul 2 links with the core network 3;
wherein at least one site 5-i, comprising macro base station 6-i, contains at least one micro base station 16-1...16-N, wherein N is an integer, connected by its first inputs/outputs 10-i via backhaul 2 links with the core network 3, and by its second inputs/outputs 17-i at retransmission frequencies F_{R}, directly interacting with K groups, wherein K is an integer, of capacity transfer repeaters 15-1...15-K through cellular radio channels at retransmission frequencies F_{R}, wherein groups of capacity transfer repeaters 15-1...15-K interact on their sites with customer devices 4 at operating frequencies F₀ and are mutually connected in each group 15-1...15-K at retransmission frequencies F_{R}.

14. A cellular communication system according to claim 13, wherein connection of micro base stations 16-1...16-N to the core network 3 is performed via shared with macro base station 6-i wired or wireless backhaul 2 link.

15. A cellular communication system according to any one of claims 13 or 14, wherein micro base stations 16-1...16-N interacting with groups of capacity transfer repeaters 15-1...15-K are located on separate sites 17-1...17-G, where G is an integer, of micro base stations geographically spaced apart from sites 5-1...5-Q of base stations 6-1...6-Q, and connection of micro base stations 16-1...16-N to the core network 3 is performed via wired or wireless separate backhaul 19 links of micro base stations.

16. A cellular communication system according to claim 15, wherein connection of micro base stations 16-1...16-N on sites 17-j of micro base stations to the core network 3 is performed successively via the Internet 20, a security server 21, and a service server 22 of micro base stations.

17. A cellular communication system according to any one of claims 13, 14, 16, wherein each of said K groups of capacity transfer repeaters 15-1...15-K, in conjunction with connected with them micro base stations 16-1...16-N forming cellular radio channels directly at retransmission frequencies F_{R}, operates in any cellular standard, thereby allowing the creation of multi-standard cellular stations with channel capacity transfer irrespective of the cellular standard, in which cellular macro base stations 6-i are operating.

18. A cellular communication system according to claim 15, wherein each of said K groups of capacity transfer repeaters 15-1...15-K, in conjunction with connected with them micro base stations 16-1...16-N, operates in any cellular standard, thereby allowing the creation of multi-standard cellular stations with channel capacity transfer irrespective of the cellular standard, in which cellular macro base stations 6-i are operating.

19. A cellular communication system according to any one of claims 13, 14, 16, 18, using standard cellular radio interfaces at frequencies F_{R} for interaction among capacity transfer repeaters 15-1...15-K, wherein the system is invariant to the manufacturer of standard equipment of cellular macro base stations 6-i and micro base stations 16-1...16-N, and customer devices 4.

20. A cellular communication system according to claim 15, using standard cellular radio interfaces at frequencies F_{R} for interaction among capacity transfer repeaters 15-1...15-K, wherein the system is invariant to the manufacturer of standard equipment of macro base stations 6-i and micro base stations 9-1...9-N, and customer devices 4.

21. A cellular communication system according to claim 17, using standard cellular radio interfaces at frequencies F_{R} for interaction among capacity transfer repeaters 15-1...15-K, wherein the system is invariant to the manufacturer of standard equipment of macro base stations 6-i and micro base stations 16-1...16-N, and customer devices 4.

22. A cellular communication system according to any one of claims 13, 14, 16, 18, 20, 21, wherein separate groups of capacity transfer repeaters 15-1...15-K, compatible with connected with them micro base stations 16-1...16-N, belong to different cellular operators, including Cellular Virtual Network Operators (MVNO), which provide communication services in different cellular standards and use different or shared cellular operating frequencies F₀ and corresponding retransmission frequencies F_{R}; wherein networks of said cellular operators interact among themselves or operate autonomously with using own backhaul links, customer databases, authentication systems, switching systems, provided services and cellular communications rates.

23. A cellular communication system according to claim 15, wherein separate groups of capacity transfer repeaters 15-1...15-K, compatible with connected with them micro base stations 16-1...16-N, belong to different cellular operators, including Cellular Virtual Network Operators (MVNO), which provide communication services in different cellular standards and use different or shared operating frequencies F₀ and corresponding retransmission frequencies F_{R}; wherein networks of said cellular operators interact among themselves or operate autonomously with using own backhaul links, customer databases, authentication systems, switching systems, provided services and cellular communications rates.

24. A cellular communication system according to claim 19, wherein separate groups of capacity transfer repeaters 15-1...15-K, compatible with connected with them micro base stations 16-1...16-N, belong to different cellular operators, including Cellular Virtual Network Operators (MVNO), which provide communication services in different cellular standards and use different or shared cellular operating frequencies F₀ and corresponding retransmission frequencies F_{R}: wherein networks of said cellular operators interact among themselves or operate autonomously with using own backhaul links, customer databases, authentication systems, switching systems, provided services and cellular communications rates.

25. A cellular communication system with channel capacity transfer, comprising:
a core network 3 connected via backhaul 19 links to a radio subsystem 1 connected through cellular radio channels at cellular operating frequencies F₀ with customer devices 4, wherein
the radio subsystem 1 comprises a subsystem of micro base station sites 17-1...17-j...17-G; each micro base station site 17-j comprises cellular micro base stations 9-1...9-N connected by their first inputs/outputs 18-j via backhaul 19 links with the core network 3, and interacting directly by their second inputs/outputs 11-1...11-N at operating frequencies cellular F₀ with inputs/outputs 12-1...12-N of a radio frequency converter 13-j, which provides frequency transfer of cellular radio channels from operating frequencies F₀ to the retransmission frequencies F_{R} bandwidth different from operating frequencies F₀; antenna input/output 14-j of the radio frequency converter 13-j is connected with K groups of capacity transfer repeaters 15-1...15-K through cellular radio channels at retransmission frequencies F_{R}; the capacity transfer repeaters 15-1...15-K in each group are connected among themselves at retransmission frequencies F_{R} and interact on their sites with customer devices 4 at cellular operating frequencies F₀, creating continuous or separate communication areas.

26. A cellular communication system according to claim 25, wherein connection of micro base stations 9-1...9-N on micro base station sites 17-j to the core network 3 is performed successively via the Internet 20, a security server 21, and service server 22 of micro base stations.

27. A cellular communication system according to any one of claims 25, 26, wherein each of said K groups of capacity transfer repeaters 15-1...15-K, in conjunction with connected with them micro base stations 9-1...9-N, operates in any cellular standard, thereby allowing the creation of multi-standard cellular stations with channel capacity transfer without the use of standard macro base stations.

28. A cellular communication system according to claim 27, wherein separate groups of capacity transfer repeaters 15-1...15-K, compatible with micro base stations 9-1...9-N connected with them at frequencies F_{R}, belong to different cellular operators providing communication services in different cellular standards, and use different or shared cellular operating frequencies F₀ and corresponding retransmission frequencies F_{R}; wherein networks of said cellular operators interact among themselves or operate autonomously with using own backhaul links, customer databases, authentication systems, switching systems, provided services and cellular communications rates.

29. A cellular communication system with channel capacity transfer, comprising:
a core network 3 connected via backhaul 19 links with a radio subsystem 1 that is connected through cellular radio channels at cellular operating frequencies F₀ with customer devices 4, wherein
the radio subsystem 1 comprises a subsystem of micro base station sites 17-1...17-j...17-G; each micro base station site 17-j contains cellular micro base stations 16-1...16-N connected by their first inputs/outputs 10-j via backhaul 19 links with the core network 3, and interacting directly by their second inputs/outputs 25-j at retransmission frequencies F_{R} with K groups of capacity transfer repeaters 15-1...15-K, wherein capacity transfer repeaters 15-1...15-K in each group are successively connected among themselves at retransmission frequencies F_{R} and interact on their sites with customer devices 4 at cellular operating frequencies F₀, creating continuous or separate communication areas.

30. A cellular communication system according to claim 29, wherein connection of micro base stations 16-1...16-N on micro base station sites 17-j to the core network 3 is performed successively via the Internet 20, a security server 21, and a service server 22 of micro base stations.

31. A cellular communication system according to any one of claims 29, 30, wherein each of said K groups of capacity transfer repeaters 15-1...15-K, in conjunction with connected with them micro base stations 16-1...16-N, operates in any cellular standard, thereby allowing the creation of multi-standard cellular stations with channel capacity transfer independent of cellular standard.

32. A cellular communication system according to claim 31, wherein separate groups of capacity transfer repeaters 15-1...15-K, compatible with micro base stations 16-1...16-N connected with them at frequencies F_{R}, belong to different cellular operators, which provide communication services in different cellular standards, and use different or shared cellular operating frequencies F₀ and corresponding retransmission frequencies F_{R}; wherein networks of said cellular operators interact among themselves or operate autonomously with using own backhaul links, customer databases, authentication systems, switching systems, provided services and cellular communications rates.

## Amended claims

### Amended claims under Art. 19.1 PCT

1. A cellular communication system with channel capacity transfer, comprising:
a core network (3) connected via backhaul (2) links to a radio subsystem (1) that is connected through cellular radio channels at cellular operating frequencies (F₀) with customer devices (4), wherein
the radio subsystem (1) comprises a subsystem of sites (5-1...5-i...5-Q), where i, Q are integers, of base stations; each base station site (5-i) contains cellular macro base stations (6-i), and each macro base station (6-i) is connected by its first antenna input/output (7-i) through cellular radio channels at cellular operating frequencies (F₀) with customer devices (4), and the macro base station (6-i) is connected by second input/output (8-i) via backhaul (2) links to the core network (3) ;
at least one site (5-i) containing a macro base station (6-i) includes at least one small cell (9-1...9-N), where N is an integer, which is connected by its first inputs/outputs (10-i) via backhaul (2) links to the core network (3); at least one small cell (9-1...9-N) interacts directly through its second inputs/outputs (11-1...11-N) at cellular operating frequencies (F₀) with respective inputs/outputs (12-1...12-N) of a radio frequency converter (13-i) that provides frequency transfer of cellular radio channels formed by at least one small cell (9-1...9-N) from cellular operating frequencies (F₀) to the retransmission frequencies (F_{R}) bandwidth that are different from the operating frequencies (F₀) of the cellular system; wherein antenna input/output (14-i) of the radio frequency converter (13-i) is connected with K groups, where K is an integer, of capacity transfer repeaters (15-1...15-K) through cellular radio channels at retransmission frequencies (F_{R}), and the groups of capacity transfer repeaters (15-1...15-K) interact on their sites with customer devices (4) at operating frequencies (F₀) and are mutually connected in each group (15-1...15-K) at retransmission frequencies (F_{R}) .

2. A cellular communication system according to claim 1, wherein connection of small cells (9-1...9-N) to the core network (3) is performed via shared with the macro base station (6-i) wired or wireless backhaul (2) link.

3. A cellular communication system according to any one of claims 1 or 2, wherein small cells (9-1...9-N) with radio frequency converters (13-j), where j is an integer, interacting with groups of capacity transfer repeaters (15-1...15-K) are located on separate sites (17-1...17-G), where G is an integer, of small cells geographically spaced apart from sites (5-1...5-Q) of base stations (6-1...6-Q), and connection of small cells (9-1...9-N) to the core network (3) is performed via wired or wireless links of a separate backhaul (19) of small cells.

4. A cellular communication system according to claim 3, wherein connection of small cells (9-1...9-N) to the core network (3) is performed successively via the Internet (20), a security server (21), and a service server (22) of small cells.

5. A cellular communication system according to any one of claims 1, 2, 4, wherein each of said K groups of capacity transfer repeaters (15-1...15-K), in conjunction with small cells (9-1...9-N) connected with them via the radio frequency converter (13-i), operates in any cellular standard, thereby allowing the creation of multi-standard cellular communication systems with channel capacity transfer irrespective of the cellular standard in which cellular macro base stations (6-i) are operating.

6. A cellular communication system according to claim 3, wherein each of said K groups of capacity transfer repeaters (15-1...15-K), in conjunction with small cells (9-1...9-N) connected with them via radio frequency converter (13-i), operates in any cellular standard, thereby allowing the creation of multi-standard cellular communication systems with channel capacity transfer irrespective of the cellular standard in which cellular macro base stations (6-i) are operating.

7. A cellular communication system according to any one of claims 1, 2, 4, 6, using standard cellular radio interfaces at frequencies (F_{R}) for interaction among capacity transfer repeaters (15-1...15-K), wherein the system is invariant relative to the manufacturer of standard equipment of cellular macro base stations (6-i) and small cells (9-1...9-N), and customer devices 4.

8. A cellular communication system according to claim 3, using standard cellular radio interfaces at frequencies (F_{R}) for interaction among capacity transfer repeaters (15-1...15-K), wherein the system is invariant relative to the manufacturer of standard equipment of cellular macro base stations (6-i) and small cells (9-1...9-N), and customer devices (4).

9. A cellular communication system according to claim 5, using standard cellular radio interfaces at frequencies (F_{R}) for interaction among capacity transfer repeaters (15-1...15-K), wherein the system is invariant relative to the manufacturer of standard equipment of cellular macro base stations (6-i) and small cells (9-1...9-N), and customer devices (4).

10. A cellular communication system according to any one of claims 1, 2, 4, 6, 8, 9, wherein separate groups of capacity transfer repeaters (15-1...15-K), compatible with small cells (9-1...9-N) connected with them at frequencies (F_{R}) via a radio frequency converter (13-j), belong to different cellular operators, including Cellular Virtual Network Operators (MVNO) that provide communication services in different cellular standards and use different or shared cellular operating frequencies (F₀) and corresponding retransmission frequencies (F_{R}); wherein networks of said cellular operators interact among themselves or operate autonomously with using own backhaul links, customer databases, authentication systems, switching systems, provided services and cellular communications rates.

11. A cellular communication system according to claim 3, wherein separate groups of capacity transfer repeaters (15-1...15-K), compatible with small cells (9-1...9-N) connected with them at frequencies (F_{R}), belong to different cellular operators, including Cellular Virtual Network Operators (MVNO) that provide communication services in different cellular standards and use different or shared cellular operating frequencies (F₀) and corresponding retransmission frequencies (F_{R}); wherein networks of said cellular operators interact among themselves or operate autonomously with using own backhaul links, customer databases, authentication systems, switching systems, provided services and cellular communications rates.

12. A cellular communication system according to claim 7, wherein separate groups of capacity transfer repeaters (15-1...15-K), compatible with small cells (9-1...9-N) connected with them at frequencies (F_{R}), belong to different cellular operators, including Cellular Virtual Network Operators (MVNO) that provide communication services in different cellular standards and use different or shared cellular operating frequencies (F₀) and corresponding retransmission frequencies (F_{R}); wherein networks of said cellular operators interact among themselves or operate autonomously with using own backhaul links, customer databases, authentication systems, switching systems, provided services and cellular communications rates.

13. A cellular communication system with channel capacity transfer, comprising:
a core network (3) connected via backhaul (2) links to a radio subsystem (1) that is connected through cellular radio channels at cellular operating frequencies (F₀) with customer devices (4), wherein
the radio subsystem (1) comprises a subsystem of sites (5-1...5-i...5-Q), where i, Q are integers, of base stations; each base station site (5-i) includes cellular macro base stations (6-i); each macro base station (6-i) is connected by its first antenna input/output (7-i) via cellular radio channels at cellular operating frequencies (F₀) with customer devices (4); and the macro base station (6-i) is connected by its second input/output (8-i) via backhaul (2) links with the core network (3) ;
wherein at least one site (5-i), comprising macro base station (6-i), contains at least one small cell (16-1...16-N), wherein N is an integer, connected by its first inputs/outputs (10-i) via backhaul (2) links with the core network (3), and by its second inputs/outputs (17-i) at retransmission frequencies (F_{R}), directly interacting with K groups, wherein K is an integer, of capacity transfer repeaters (15-1...15-K) through cellular radio channels at retransmission frequencies (F_{R}), wherein groups of capacity transfer repeaters (15-1...15-K) interact on their sites with customer devices (4) at operating frequencies (F₀) and are mutually connected in each group (15-1...15-K) at retransmission frequencies (F_{R}).

14. A cellular communication system according to claim 13, wherein connection of small cells (16-1...16-N) to the core network (3) is performed via shared with macro base station (6-i) wired or wireless backhaul (2) link.

15. A cellular communication system according to any one of claims 13 or 14, wherein small cells (16-1...16-N) interacting with groups of capacity transfer repeaters (15-1...15-K) are located on separate sites (17-1...17-G), where G is an integer, of small cells geographically spaced apart from sites (5-1...5-Q) of base stations (6-1...6-Q), and connection of small cells (16-1...16-N) to the core network (3) is performed via wired or wireless separate backhaul (19) links of small cells.

16. A cellular communication system according to claim 15, wherein connection of small cells (16-1...16-N) on sites (17-j) of small cells to the core network (3) is performed successively via the Internet (20), a security server (21), and a service server (22) of small cells.

17. A cellular communication system according to any one of claims 13, 14, 16, wherein each of said K groups of capacity transfer repeaters (15-1...15-K), in conjunction with connected with them small cells (16-1...16-N) forming cellular radio channels directly at retransmission frequencies (F_{R}), operates in any cellular standard, thereby allowing the creation of multi-standard cellular stations with channel capacity transfer irrespective of the cellular standard, in which cellular macro base stations (6-i) are operating.

18. A cellular communication system according to claim 15, wherein each of said K groups of capacity transfer repeaters (15-1...15-K), in conjunction with connected with them small cells (16-1...16-N), operates in any cellular standard, thereby allowing the creation of multi-standard cellular stations with channel capacity transfer irrespective of the cellular standard, in which cellular macro base stations (6-i) are operating.

19. A cellular communication system according to any one of claims 13, 14, 16, 18, using standard cellular radio interfaces at frequencies (F_{R}) for interaction among capacity transfer repeaters (15-1...15-K), wherein the system is invariant to the manufacturer of standard equipment of cellular macro base stations 6-i and small cells (16-1...16-N), and customer devices (4) .

20. A cellular communication system according to claim 15, using standard cellular radio interfaces at frequencies (F_{R}) for interaction among capacity transfer repeaters (15-1...15-K), wherein the system is invariant to the manufacturer of standard equipment of macro base stations (6-i) and small cells (9-1...9-N), and customer devices (4).

21. A cellular communication system according to claim 17, using standard cellular radio interfaces at frequencies (F_{R}) for interaction among capacity transfer repeaters (15-1...15-K), wherein the system is invariant to the manufacturer of standard equipment of macro base stations 6-i and small cells (16-1...16-N), and customer devices (4).

22. A cellular communication system according to any one of claims 13, 14, 16, 18, 20, 21, wherein separate groups of capacity transfer repeaters (15-1...15-K), compatible with connected with them small cells (16-1...16-N), belong to different cellular operators, including Cellular Virtual Network Operators (MVNO), which provide communication services in different cellular standards and use different or shared cellular operating frequencies (F₀) and corresponding retransmission frequencies (F_{R}); wherein networks of said cellular operators interact among themselves or operate autonomously with using own backhaul links, customer databases, authentication systems, switching systems, provided services and cellular communications rates.

23. A cellular communication system according to claim 15, wherein separate groups of capacity transfer repeaters (15-1...15-K), compatible with connected with them small cells (16-1...16-N), belong to different cellular operators, including Cellular Virtual Network Operators (MVNO), which provide communication services in different cellular standards and use different or shared operating frequencies (F₀) and corresponding retransmission frequencies (F_{R}); wherein networks of said cellular operators interact among themselves or operate autonomously with using own backhaul links, customer databases, authentication systems, switching systems, provided services and cellular communications rates.

24. A cellular communication system according to claim 19, wherein separate groups of capacity transfer repeaters (15-1...15-K), compatible with connected with them small cells (16-1...16-N), belong to different cellular operators, including Cellular Virtual Network Operators (MVNO), which provide communication services in different cellular standards and use different or shared cellular operating frequencies (F₀) and corresponding retransmission frequencies (F_{R}) ; wherein networks of said cellular operators interact among themselves or operate autonomously with using own backhaul links, customer databases, authentication systems, switching systems, provided services and cellular communications rates.

25. A cellular communication system with channel capacity transfer, comprising:
a core network (3) connected via backhaul (19) links to a radio subsystem (1) connected through cellular radio channels at cellular operating frequencies (F₀) with customer devices (4), wherein
the radio subsystem (1) comprises a subsystem of small cell sites (17-1...17-j...17-G) ; each small cell site (17-j) comprises cellular small cells (9-1...9-N) connected by their first inputs/outputs (18-j) via backhaul (19) links with the core network (3), and interacting directly by their second inputs/outputs (11-1...11-N) at operating frequencies cellular (F₀) with inputs/outputs (12-1...12-N) of a radio frequency converter (13-j), which provides frequency transfer of cellular radio channels from cellular operating frequencies (F₀) to the retransmission frequencies (F_{R}) bandwidth different from operating frequencies (F₀) ; antenna input/output (14-j) of the radio frequency converter (13-j) is connected with K groups of capacity transfer repeaters (15-1...15-K) through cellular radio channels at retransmission frequencies (F_{R}) ; the capacity transfer repeaters (15-1...15-K) in each group are connected among themselves at retransmission frequencies (F_{R}) and interact on their sites with customer devices (4) at cellular operating frequencies (F₀), creating continuous or separate communication areas.

26. A cellular communication system according to claim 25, wherein connection of small cells (9-1...9-N) on small cell sites (17-j) to the core network (3) is performed successively via the Internet (20), a security server (21), and service server (22) of small cells.

27. A cellular communication system according to any one of claims 25, 26, wherein each of said K groups of capacity transfer repeaters (15-1...15-K), in conjunction with connected with them small cells (9-1...9-N), operates in any cellular standard, thereby allowing the creation of multi-standard cellular stations with channel capacity transfer without the use of standard macro base stations.

28. A cellular communication system according to claim 27, wherein separate groups of capacity transfer repeaters (15-1...15-K), compatible with small cells (9-1...9-N) connected with them at frequencies (F_{R}), belong to different cellular operators providing communication services in different cellular standards, and use different or shared cellular operating frequencies (F₀) and corresponding retransmission frequencies (F_{R}); wherein networks of said cellular operators interact among themselves or operate autonomously with using own backhaul links, customer databases, authentication systems, switching systems, provided services and cellular communications rates.

29. A cellular communication system with channel capacity transfer, comprising:
a core network (3) connected via backhaul (19) links with a radio subsystem (1) that is connected through cellular radio channels at cellular operating frequencies (F₀) with customer devices (4), wherein
the radio subsystem (1) comprises a subsystem of small cell sites (17-1...17-j...17-G) ; each small cell site (17-j) contains cellular small cells (16-1...16-N) connected by their first inputs/outputs (10-j) via backhaul (19) links with the core network (3), and interacting directly by their second inputs/outputs (25-j) at retransmission frequencies (F_{R}) with K groups of capacity transfer repeaters (15-1...15-K), wherein capacity transfer repeaters (15-1...15-K) in each group are successively connected among themselves at retransmission frequencies (F_{R}) and interact on their sites with customer devices (4) at cellular operating frequencies (F₀), creating continuous or separate communication areas.

30. A cellular communication system according to claim 29, wherein connection of small cells (16-1...16-N) on small cell sites (17-j) to the core network (3) is performed successively via the Internet (20), a security server (21), and a service server (22) of small cells.

31. A cellular communication system according to any one of claims 29, 30, wherein each of said K groups of capacity transfer repeaters (15-1...15-K), in conjunction with connected with them small cells (16-1...16-N), operates in any cellular standard, thereby allowing the creation of multi-standard cellular stations with channel capacity transfer independent of cellular standard.

32. A cellular communication system according to claim 31, wherein separate groups of capacity transfer repeaters (15-1...15-K), compatible with small cells (16-1...16-N) connected with them at frequencies (F_{R}), belong to different cellular operators, which provide communication services in different cellular standards, and use different or shared cellular operating frequencies (F₀) and corresponding retransmission frequencies (F_{R}); wherein networks of said cellular operators interact among themselves or operate autonomously with using own backhaul links, customer databases, authentication systems, switching systems, provided services and cellular communications rates.
